(19) Europäisches Patentamt
European Patent Office
Office européen des brevets

(11) Veröffentlichungsnummer: **0 113 048**
**B1**

(12) # EUROPÄISCHE PATENTSCHRIFT

(45) Veröffentlichungstag der Patentschrift: **11.06.86**

(51) Int. Cl.⁴: **C 08 F 20/06**, C 08 F 2/38, D 21 H 1/28, C 11 D 3/37

(21) Anmeldenummer: **83111890.6**

(22) Anmeldetag: **28.11.83**

(54) **Verfahren zur Herstellung von pulverförmigen Polymerisaten und deren Verwendung.**

(30) Priorität: **04.12.82 DE 3244989**
**09.06.83 DE 3320864**

(43) Veröffentlichungstag der Anmeldung:
**11.07.84 Patentblatt 84/28**

(45) Bekanntmachung des Hinweises auf die Patenterteilung:
**11.06.86 Patentblatt 86/24**

(84) Benannte Vertragsstaaten:
**AT BE CH DE FR GB IT LI NL SE**

(56) Entgegenhaltungen:
**EP-A-0 027 936**
**US-A-3 665 035**

(73) Patentinhaber: **BASF Aktiengesellschaft**, *Carl-Bosch-Strasse 38, D-6700 Ludwigshafen (DE)*

(72) Erfinder: **Hennig, Karl, Beethovenstrasse 26, D-6717 Hessheim (DE)**
Erfinder: **Messmer, Karlheinz, Dr., Auf Kies 6, D-6719 Weisenheim (DE)**
Erfinder: **Hartmann, Heinrich, Dr., Weinheimer Strasse 46, D-6703 Limburgerhof (DE)**

**EP 0 113 048 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Aus der US-PS 4 135 043 ist ein Verfahren zur Herstellung von pulverförmigen wasserlöslichen Polymerisaten bekannt, bei dem man wasserlösliche ethylenisch ungesättigte Monomere in einem Pulverbett in Gegenwart üblicher Polmerisationsinitiatoren und Wasser als Hilfsflüssigkeit unter Aufrechterhaltung des Pulverzustands, Abführen der Polymerisationswärme durch Abdestillieren von Wasser und Umwälzung der Reaktionsmasse polymerisiert.

Aus der EP-A 27 936 ist ebenfalls ein Verfahren zur Herstellung von pulverförmigen Polymerisaten durch Polymerisieren der Monomeren in einem Pulverbett bekannt, bei dem man zum Abführen der Polymerisationswärme inerte organische Lösungsmittel verwendet, die ein Fällungsmittel für die Polymerisate sind. Nach den bekannten Verfahren werden Polymerisate eines relativ hohen Molekulargewichts mit relativ breiter Molekulargewichtsverteilung erhalten.

Aus der US-PS 3 898 037 sind Copolymerisate aus (Meth)acrylamidoalkylsulfonsäuren und Acrylsäure oder Methacrylsäure bekannt, die in geringen Die Copolymerisate können durch Copolymerisieren der Monomerenmischungen in Lösungsmittelgemischen aus Wasser und Isopropanol hergestellt werden.

Aus der DE-PS 27 57 329 ist ein Verfahren zur Herstellung von Polymerisaten der Acrylsäure oder Methacrylsäure bzw. deren Gemische bekannt, bei dem man die Monomeren in Isopropanol oder Mischungen aus Wasser und Isopropanol, die mindestens 40 Gew.% Isopropanol enthalten, mit Hilfe radikalischer Polymerisationsinitiatoren bei Temperaturen von 120 bis 200°C unter Druck polymerisiert. Die Polymerisate werden als Dispergiermittel zur Herstellung von wäßrigen Pigmentanschlämmungen für Papierstreichmassen verwendet. Es besteht jedoch auch ein Bedarf an pulverförmigen Dispergiermitteln bzw. Mahlhilfsmitteln. Pulverförmige Produkte können jedoch nicht in wirtschaftlicher Weise nach den bekannten Verfahren erhalten werden.

Die aus der DE-PS 27 57 329 bekannten Polymerisate sind zwar sehr wirksame Dispergiermittel, jedoch sind sie als Mahlhilfsmittel zur Herstellung von wäßrigen Pigmentanschlämmungen nicht so ceeignet, weil das Vermahlen in einem Temperaturbereich erfolgt, in dem die Viskosität der Pigmentanschlämmungen verglichen mit derjenigen bei Raumtemperatur sehr niedrig ist, so daß nicht genügend hohe Scherkräfte auftreten, wie sie für den Mahlvorgang eigentlich gewünscht werden, um das zu vermahlende Gut zu zerkleinern und zu dispergieren.

Aufgabe der Erfindung ist es, ein Verfahren zur Herstellung von niedrigmolekularen, wasserlöslichen, pulverförmigen Polymerisaten zur Verfügung zu stellen, die beispielsweise als Mahlhilfsmittel und Dispergiermittel oder als Inkrustierungsinhibitoren für Waschmittel verwendet werden können.

Die Aufgabe wird erfindungsgemäß gelöst mit einem Verfahren zur Herstellung von pulverförmigen Polymerisaten auf Basis von wasserlöslichen ethylenisch ungesättigten Monomeren durch Polymerisieren von Monomeren oder Monomerenmischungen aus

a) 100 bis 40 Gew.% Acrylsäure und/oder Methacrylsäure,

b) 0 bis 60 Gew.% einer Verbindung der Formel

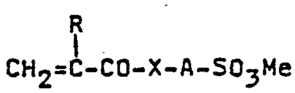

(I),

$-CO-X-A-SO_3Me$ (I),

in der

R = H, $CH_3$

X = -NH-, -O

-A = $C_1$- bis $C_8$-Alkylen und gegebenenfalls $C_1$-bis $C_3$-alkylsubstituiertes Alkylen und

Me = H, Na, K, $NH_4$ bedeuten und/oder 0 bis 30 Gew.% einer Verbindung der Formel

$CH_2=CH-SO_3Me$ (II),

in der Me die in Formel I angegebene Bedeutung hat, und

c) 0 bis 30 Gew.% Maleinsäureanhydrid oder Maleinsäure,

wobei die Summe der Prozentangaben a) bis c) jeweils 100 beträgt und die Monomeren in Wasser oder in Wasser-Isopropanol-Mischungen gelöst sind,

in einem Pulverbett in Gegenwart üblicher Polymerisationsinitiatoren unter Aufrechterhaltung des Pulverzustandes, Abführen der Polymerisationswärme durch Abdestillieren der Lösungsmittel und Umwälzung der Reaktionsmasse, wenn 40 bis 95 % der Säuregruppen der Monomeren neutralisiert sind und wenn die Polymerisation in Gegenwart von 0,05 bis 10 Mol%, bezogen auf die Monomeren, einer Thiocarbonsäure, eines Enolethers der Formel

$$CH_2=CH-SO_3Me \qquad (II),$$

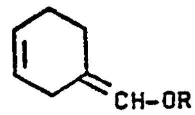

(III),

in der R = $C_1$- bis $C_5$-Alkyl ist und/oder Salzen oder Chelaten von Übergangsmetallen der 8. Nebengruppe des Periodischen Systems sowie von Kupfer oder 2-Mercaptoethanol als Regler durchgeführt wird. Die so hergestellten Polymerisate lösen sich leicht in Wasser. Sie sind wirksame Mahlhilfsmittel und Dispergiermittel für Pigmente und werden außerdem als Inkrustierungsinhibitoren für Waschmittel verwendet.

Nach dem erfindungsgemäßen Verfahren werden Homo- oder Copolymerisate hergestellt. Für die Herstellung von Homopolymerisaten unterwirft man entweder Acrylsäure oder Methacrylsäure der Polymerisation. Copolymerisate werden erhalten, indem man entweder Mischungen aus Acrylsäure und Methacrylsäure polymerisiert oder mindestens eine Verbindung der Komponente a) mit einer Verbindung gemäß b) und/oder c) copolymerisiert.

Die Monomeren der Gruppe b) können mit Hilfe der allgemeinen Formel I charakterisiert werden:

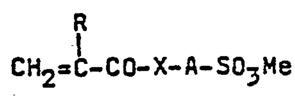

(I) oder

$CH_2=CH-SO_3Me$ (II),

in denen
R = H, $CH_3$
X = -NH-, -O
-A = $C_1$- bis $C_8$-Alkylen und gegenenenfalls $C_1$- bis $C_3$-alkylsub-stituiertes Alkylen und
Me = H, Na, K, $NH_4$, Amin bedeuten.

Verbindungen dieser Art sind im Handel erhältlich. Diejenigen Verbindungen der Formel I, in denen X = Sauerstoff bedeutet, werden beispielsweise durch Umsetzung von -Sultonen, wie Propan- oder Butansulton mit den Kalisalzen der Methacrylsäure bzw. Acrylsäure hergestellt.

Vorzugsweise verwendet man als Monomeren der Gruppe b) die Verbindung der Formel IV

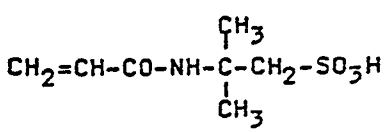

(IV) (2-Acrylamido-2--methyl-propansulfonsäure),

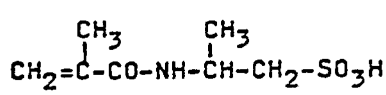

(V) (2-Methylacrylamido-propansulfonsäure),

$CH_2{=}CH{-}CO{-}NH{-}\overset{CH_3}{\overset{|}{C}}H{-}CH_2{-}SO_3H$ (VI) (2-Acrylamidopropan-sulfonsäure), oder

Natriumvinylsulfonat.

Die Monomeren der Formel I der Gruppe b) sind zu 0 bis 60, vorzugsweise 5 bis 45 Gew.% am Aufbau der Copolymerisate beteiligt, während die Monomeren der Formel II zu 0 bis 30, vorzugsweise 5 bis 25 Gew.% Bestandteil der Copolymerisate sind.

Als Monomere der Gruppe c) verwendet man Maleinsäureanhydrid oder Maleinsäure. Diese Monomeren können zu 0 bis 30, vorzugsweise 0 bis 20 % am Aufbau der Copolymerisate beteiligt sein.

Vorzugsweise werden Homopolymerisate der Acrylsäure oder Copolymerisate der Acrylsäure mit 5 bis 45 Gew.% einer Verbindung der Formel IV, V, VI und/oder Natriumvinylsulfonat hergestellt.

Man löst die Monomeren oder eine Mischung der Monomeren in Wasser oder Wasser-Isopropanol-Mischungen, die bis zu 25 Gew.% Isopropanol enthalten. Die Konzentration der Monomeren in dem Lösungsmittel beträgt 30 bis 70 Gew.%.

Die Polymerisation wird in einem Pulverbett durchgeführt, d.h. in einer Polymerisationsvorrichtung wird zunächst ein Pulver vorgelegt. Als Pulver eignen sich sowohl anorganische als auch organische pulverförmige Materialien, die unter den Reaktionsbedingungen nicht mit den Monomeren oder Polymeren reagieren. Geeignete pulverförmige anorganische Materialien sind beispielsweise Quarzmehl, Talkum, Aluminiumoxid, Kochsalz oder Glasperlen. Vorzugsweise legt man jedoch in der Polymerisationszone ein inertes pulverförmiges Polymerisat vor, das der Zusammensetzung des sich aus dem Monomerengemisch bzw. dem zu polymerisierenden Monomeren neu bildenden Polymerisates entspricht. Diese Polymerisate werden - falls kein pulverförmiges Polmerisat zur Verfügung steht - nach bekannten Polymerisationsverfahren hergestellt, z.B. durch Polymerisieren der Monomeren in Substanz und Zerkleinern des festen Polymerisates, durch Polymerisieren der Monomeren in einer Wasser-in-Öl-Emulsion und Ausfällen und Isolieren des gebildetan Polymerisates oder durch Fällungs- oder Perlpolymerisation. Der Teilchendurchmesser der pulverförmigen Materialien liegt zwischen 10 µm und 20 mm.

Als Polymerisationsvorrichtungen kommen beispielsweise Kessel, Rührautoklaven, gegebenenfalls als mehrstufige Kaskade oder auch Kombinationen von Rührkesseln mit nachgeschaltetem Strömungsrohr in Betracht.

Der Pulverzustand in der Polymerisationszone wird während der gesamten Polymerisationsdauer aufrechterhalten. Die Monomerenlösung bzw. -emulsion wird worzugsweise in feiner Verteilung auf das Pulver in der Polymerisationszone aufgebracht. Dieser Verfahrensschritt geschieht in der Regel durch Versprühen der Monomerenlösung, entweder auf das Pulverbett oder auch direkt im Pulverbett. Die Monomeren werden in dem Maße in die Polymerisationszone eingebracht, in dem sie auch polymerisieren. Dies kann entweder kontinuierlich oder absatzweise erfolgen. Während der Polymerisation ist für eine ausreichende Umwälzung der Reaktionsmasse zu sorgen. Die Mischung wird vorzugsweise gerührt. Die bei der Polymerisation entstehende Wärme sowie die durch Umwälzung des Pulvers entstehende, werden durch kontinuierliches Verdampfen des Lösungsmittels bzw. der Lösungsmittelmischungen aus der Reaktionszone entfernt. Vorzugsweise wird die Konzentration der Monomeren in den organischen Lösungsmittel so gewählt, daß bei vollständiger Polymerisation der Monomeren die freigesetzte Polymerisationsenthalpie gerade ausreicht, um die Lösungsmittel unter den herrschenden Reaktionsbedingungen durch Verdampfen vollständig aus der Polymerisationszone zu entfernen. Die Konzentration der Monomeren in den Lösungsmitteln liegt daher vorzugsweise in dem Bereich von 45 bis 60 Gew.%.

Die Polymerisation erfolgt in Gegenwart üblicher Polymerisationsinitiatoren. Vorzugsweise verwendet man solche Polymerisationsinitiatoren, die in Wasser löslich oder in Wasser emulgierbar sind, z.B. Wasserstoffperoxid, Natrium-, Kalium- oder Ammoniumperoxidisulfat. Außerdem eignen sich als Initiatoren die bekannten Redoxkatalysatorsysteme, wie Metallsalze und Peroxide, sowie wasserlösliche Azoverbindungen, wie 2,2'-Azo-bis-(2-amidinopropan)-hydrochlorid sowie Ketonperoxide, wie z.B. Acetylacetonperoxid. Bezogen auf die Monomeren verwendet man z.B. 1 bis 20 Gew.% Wasserstoffperoxid oder der anderen wasserlöslichen Initiatoren.

Es ist ein wesentliches Merkmal des erfindungsgemäßen Verfahrens, daß die Säuregruppen der Monomeren a), b) und c) zu 40 bis 95, vorzugsweise 70 bis 90 % neutralisiert werden und daß die Polymerisation in Gegenwart von 0,05 bis 10, vorzugsweise 5 bis 8 Mol%, bezogen auf die Monomeren, von speziell ausgewählten Reglern durchgeführt wird. Die Monomeren können in teilneutralisierter Form in die Polymerisationszone eingebracht werden oder auch erst darin teilneutralisiert werden, wobei die Base in fester oder gelöster Form eingesetzt werden kann. Sofern als Base Ammoniak oder ein niedrig siedendes Amin verwendet wird, kann die Base auch gasförmig in die Polymerisationszone eingeführt werden. Bevorzugt wird die Neutralisation der Säuregruppen enthaltenden Monomeren in der Polymerisationszone vorgenommen. In diesem Fall hat das Lösungsmittel für die Monomeren auch die Aufgabe, außer der Polymerisationswärme noch die Neutralisationswärme abzuführen. Als Basen eignen sich z.B. Natronlauge, Kalilauge, Ammoniak, Amine, Soda,

Pottasche, Calciumcarbonat, Calciumhydroxid, Calciumoxid sowie die Oxide, Hydroxide, Carbonate und Hydrogencarbonate von Magnesium und Barium.

Bei den Reglern handelt es sich um Thiocarbonsäuren, wie Thioglykolsäure, Thiomilchsäure, 3-Mercaptopropionsäure, 2-Mercaptobuttersäure und 3-Mer-capto-bernsteinsäure sowie Enolether der allgemeinen Formel

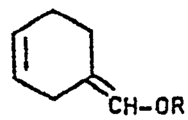

(III),

in der R = $C_1$- bis $C_5$-Alkyl ist. Die Thiocarbonsäuren können beispielsweise mit Hilfe der Formel HS-R-COOH (VII),
in der R = $C_1$- oder $C_2$ -Alkylen bedeutet, charakterisiert werden. Vorzugsweise verwendet man als Regler Thioglykolsäure und 2-Mercaptoethanol.

Eine weitere Gruppe von Reglern sind Salze oder Chelate des Kupfers und von Übergangsmetallen der 8. Nebengruppe des Periodischen Systems. Vorzugsweise verwendet man solche Verbindungen, die in dem Lösungsmittel für die Monomeren löslich sind, z.B. $Cu(NO_3)_2$, $CuSO_4$, Kupferacetat, $FeSO_4$, $Fe(NO_3)_2$, $MnSO_4$, Mn-III-acetat, $Co(NO_3)_2$ und $Ni(NO_3)_2$.

Die Polymerisation der Monomeren kann, je nach Reaktivität der Monomeren und der Wirksamkeit des Initiators, in einem weiten Temperaturbereich durchgeführt werden. Wesentlich ist lediglich, daß der Pulverzustand während der Polymerisation aufrechterhalten wird, d.h. die Temperatur sollte mindestens 10°C unterhalb des Schmelzpunkts bzw. des beginnenden Erweichungsbereiches des Polymerisate liegen, so daß sie nicht miteinander verkleben. Eine weitere auf der Hand liegende Voraussetzung ist, daß die Temperatur so hoch ist, daß das jeweils verwendete Lösungsmittel aus der Polymerisationszone verdampft. Die Polymerisation kann bei Normaldruck, im Vakuum oder auch unter erhöhtem Druck, z.B. bis 25 bar, durchgeführt werden. Die Polymerisation erfolgt vorzugsweise bei Normaldruck in dem Temperaturbereich von 115 bis 180, vorzugsweise 120 bis 150°C. Sie kann diskontinuierlich oder kontinuierlich ablaufen, wobei man als Behälter für die Reaktionszone in beiden Fällen Rührkessel oder dynamische Mischer aller Art verwenden kann. Bei kontinuierlichem Betrieb wird die Monomerenlösung nach Vermischen mit dem Initiator und dem Regler kontinuierlich oder in Intervallen der Reaktionszone zugeführt und das Polymerisat kontinuierlich oder absatzweise über eine geeignete Austragsvorrichtung, z.B. Schnecke, daraus entfernt. Pro Zeiteinheit wird dabei etwa die gleiche Menge an Polymerisat entfernt wie an Monomeren in die Reaktionszone eingebracht wird. Die Initiatoren können zusammen mit der Lösung der Monomeren oder auch getrennt davon in die Polymerisationszone eingeführt werden. Gleiches gilt für die in Betracht kommenden Regler.

Nach dem erfindungsgemäßen Verfahren erhält man Homopolymerisate oder Copolymerisate der Acrylsäure oder Methacrylsäure mit K-Werten von 8 bis 20. Die K-Werte der Polymerisate liegen vorzugsweise unterhalb 15, z.B. in dem Bereich von 10 bis 14. Die nach dem erfindungsgemäßen Verfahren hergestellten Polymerisate haben eine andere Molekulargewichtsverteilung als diejenigen, die beispielsweise durch Polymerisieren in Lösung erhalten werden. Nach dem erfindungsgemäßen Verfahren erhält man pulverförmige Polymerisate, deren Teilchendurchmesser von 10 µm bis 2 cm beträgt. Der Korndurchmesser der Polymerisatteilchen liegt vorzugsweise in dem Bereich von 0,1 bis 5 mm.

Die so hergestellten Copolymerisate werden als Mahlhilfsmittel und Dispergiermittel oder als Dispergiermittel zur Herstellung hochkonzentrierter wäßriger Anschlämmungen von Pigmenten für Papierstreichmassen verwendet. Die Einsatzmengen der Copolmerisate betragen, bezogen auf Pigment, 0,05 bis 1,0, vorzugsweise 0,3 bis 0,6 Gew.%. Als Pigmente zur Herstellung von Papierstreichmassen kommen beispielsweise Kreide, Clay aus primären und sekundären Lagerstätten, Satinweiß, Titandioxid, Kaolin und Dolomit in Betracht. Aus diesen Pigmenten für die Papierstreicherei werden hochkonzentrierte wäßrige Anschlämmungen hergestellt, die in Abhängigkeit von der Art des Pigments und dessen Teilchengröße Feststoffgehalte zum Teil bis zu 90 Gew.% haben können. Die Feststoffgehalte von Clayanschlämmungen liegen zwischen 65 und 70 Gew.%, bei Kreide beträgt der Feststoffgehalt der wäßrigen Anschlämmungen 75 bis 85 Gew.%, teilweise sogar bis zu 90 %, besonders dann, wenn es sich um Pigmente mit einem breiten Teilchengrößenspektrum handelt. Die wäßrigen Anschlämmungen werden vorzugsweise dadurch hergestellt, daß man das Dispergiermittel bereits beim Mahlen der Pigmente zusetzt. Dieser Mahlvorgang wird bekanntlich in wäßrigem Hedium durchgeführt. Kreide wird beispielsweise zu 90 % auf eine Teilchengröße von < 2 µm gemahlen, bei Clay beträgt die Korngröße des Pigments zu 85 % weniger als 2 µm. Man kann das gesamte Dispergiermittel bereits beim Mahlvorgang zusetzen oder auch so verfahren, daß man das Dispergiermittel in Wasser löst und darin die pulverförmigen Pigmente einträgt. Sofern man die Copolymerisate als Mahlhilfsmittel verwendet, setzt man sie in gleicher Menge ein, wie oben für die Dispergiermittel angegeben ist. Zum Mahlen und/ oder Dispergieren von Kreide benötigt man vorzugsweise 0,3 bis 0,6 Gew.% der Homo- oder Copolymerisate, während für Clay Mengen in dem Bereich von 0,1 bis 0,4 Gew.% für die genannten Anwendungen in Betracht kommen. Bei der Herstellung wäßriger

Anschlämmun zeigen bereits geringe Mengen der Homo- oder Copolymerisate eine auffallend bessere Dispergierbarkeit als die bisher für diesen Zweck verwendeten besten handelsüblichen Produkte auf Basis von Polyacrylaten. Zur Herstellung wäßriger hochkonzentrierter Kreideanschlämmungen einer bestimmten Viskosität benötigt man etwa 20 % weniger der erfindungsgemäß hergestellten Polymerisate als eines bekannten Acrylats gemäß Stand der Technik als Dispergiermittel. Die Homopolymerisate der Acrylsäure und die Sulfonsauregruppen enthaltenden Copolymerisate werden daher vorzugsweise zur Herstellung von hochkonzentrierten wäßrigen Kreideanschlämmungen für Papierstreichmassen verwendet. Der pH-Wert der Pigmentanschlämmungen beträgt 7 bis 12,5 und liegt vorzugsweise in dem Bereich von 7,5 und 10. Unter hochkonzentrierten wäßrigen Anschlämmungen sollen solche verstanden werden, bei denen der Pigmentgehalt mindestens 65 Gew.% beträgt.

Ein weiteres wichtiges Anwendungsgebiet für die nach dem erfindungsgemäßen Verfahren erhaltenen Homo- und Copolymerisate ist das Gebiet der Waschmittel. Die Polymerisate werden als Inkrustierungs- und Vergrauungsinhibitoren in Waschmitteln verwendet. Die Anwendungsmengen für diesen Einsatzzweck betragen 0,5 bis 5 %, bezogen auf das fertige Waschmittel.

Die in den Beispielen angegebenen Teile sind Gewichtsteile, die Angaben in Prozent beziehen sich auf das Gewicht der Stoffe, sofern nichts anderes angegeben ist. Die K-Werte wurden nach H. Fikentscher, Cellulose-Chemie 13, 48-64 und 71-74 (1932) in 5%iger wäßriger Kochsalzlösung bei einer Polymerkonzentration von 0,5 Gew.% und einer Temperatur von 25°C gemessen; dabei bedeutet $K = k \cdot 10^3$.

Die Viskosität der wäßrigen Pigmentanschlämmungen wurde mit einem Brookfield-Viskosimeter bei einer Temperatur von 20°C und 100 U/Min bestimmt.

Als Polymerisationsreaktor diente ein zylindrisches Glasgefäß von 8,5 l Inhalt, das mit einem Wendelrührer und mit einem absteigenden Kühler ausgestattet war. In das Glasgefäß mündete eine Sprühdüse, durch die das Monomerengemisch, der Initiator und der Regler auf vorgelegtes Polymidgranulat aufgesprüht wurde. In den Reaktor mündete außerdem eine Stickstoffleitung, um die Polymerisation unter Stickstoffatmosphäre durchzuführen. Die Beheizung des Polymerisationsgefäßes erfolgte mit Hilfe eines Ölbades. Das Monomerengemisch wurde mit der Lösung des Polymerisationsinitiators in einem statischen Mischer gemischt. In der Leitung, durch die das Monomerengemisch zum statischen Mischer geführt wurde, war ein Wärmetauscher eingebaut, so daß bei Bedarf gekühlt werden konnte. Zwischen Polymerisationsgefäß und absteigendem Kühler ist ein Abscheider eingebaut, um evtl. durch den Stickstoffstrom bzw. das verdampfende überschüssige Monomere oder Siedehilfsmittel mitgerissene Feststoffe abzuscheiden. Der Polymerisationsreaktor war zur Kontrolle der Guttemperatur mit einer in das Gut reichenden Temperaturmeßsonde ausgerüstet. Zur gleichzeitigen Durchführung von Polymerisation und Neutralisation im Reaktor wurde dieser entweder mit einer Feststoffdosiervorrichtung, beispielsweise einer Dosierschnecke, verbunden, über welche pulverförmiges Neutralisierungsmittel in den Reaktor dosiert wurde, oder in das Glasgefäß mündete eine zweite Sprühdüse, durch die das flüssige Neutralisiermittel ebenfalls auf das vorgelegte Granulat aufgesprüht wurde.

In der oben beschriebenen Vorrichtung wurden 1500 g eines granulierten Polyamids aus Adipinsäure und Hexamethylendiamin mit einem Korndurchmesser von 2,5 - 3,5 mm vorgelegt und unter intensiver Umwälzung auf eine Temperatur von 140°C erwärmt.

**Beispiel 1**

Eine Lösung von 151,5 g 2-Acrylamido-2-methylpropylsulfonsäure (AMPS), 165 g Wasser, 859,2 g Acrylsäure (AS) und 0,1 g Eisen-II-sulfatheptahydrat wurde in einem statischen Mischer mit einer Initiatorlösung aus 172,2 g Wasserstoffperoxid (50%ig) und 96 g Wasser, sowie mit einer Reglerlösung aus 87,3 g Thioglykolsäure, 54,8 g Wasser und 116,8 g iso-Propanol im Volumenverhältnis von etwa 3,6:1:1 zusammengeführt und im Verlauf von 3 Stunden sukzessive auf das bewegte Feststoffbett aus pulverförmigem Polyamid aufgesprüht. Gleichzeitig wurden 430,2 g Ätznatron (100%ig) ebenfalls im Verlaufe von 3 Std. gleichmäßig eingetragen (Neutralisationsgrad 85 Mol%). Das Molverhältnis von AMPS zu AS betrug etwa 1:16, die Polymerisationstemperatur 140°C. Während der Polymerisation wurde der Pulverzustand in der Polymerisationszone aufrechterhalten und das zugeführte Wasser und iso-Propanol zusammen mit dem aus der Neutralisation freiwerdenden Wasser kontinuierlich abdestilliert (ca. 600 g Kondensat). Anschließend wurden zur Absenkung des Restmonomerengehaltes 229,5 g Wasserstoffperoxid und 394 g Wasser im Verlaufe von 4 Stunden auf das weiterhin bewegte Feststoffbett bei einer Guttemperatur von 140°C aufgesprüht, wobei wiederum die zugefahrene Wassermenge kontinuierlich abdestilliert. Der Reaktorinhalt wurde anschließend in einer Kugelmühle ca. 10 Std. gemahlen, wodurch sich das gebildete Copolymerisat als Pulver vom vorgelegten Polyamidgranulat trennt und durch eine Siebung isolieren läßt.

Man erhielt ein Copolymerisat, das einen K-Wert von 10,6 und einen Restmonomerengehalt von weniger als 1 % hatte.

**Beispiel 2**

In der oben beschriebenen Polymerisationsapparatur wurde anstelle der Feststoffdosiervorrichtung eine zweite Sprühvorrichtung für wäßrige Natronlauge eingebaut. Im Reaktionsgefäß wurden 1500 g eines granulierten Polyamids mit einem Korndurchmesser von 2,5 - 3,5 mm vorgelegt und unter intensiver Umwälzung auf eine Temperatur von 135°C erwärmt.

Eine Lösung von 151,5 g 2-Acrylamido-2-methylpropylsulfonsäure (AMPS), 150 g Wasser, 859,2 g Acrylsäure (AS) und 0,1 g Eisen-II-sulfatheptahydrat wurde in einem statischen Mischer mit einer Initiatorlösung aus 172,2 g Wasserstoffperoxid (50%ig) und 115,7 g Wasser, sowie mit einer Reglerlösung aus 87,3 g Thioglykolsäure und

205,7 g Wasser im Volumenverhältnis von etwa 3,4:1:1 zusammengeführt und im Verlauf von 3 Stunden sukzessive auf das bewegte Feststoffbett aus pulverförmigem Polyamid aufgesprüht. Gleichzeitig wurde eine Lösung von 430,8 g Ätznatron in 184,5 g Wasser bei einer Temperatur der Lösung von 80°C ebenfalls im Verlaufe von 3 Std. gleichmäßig auf die intensiv bewegte Oberfläche des gerührten Feststoffbettes aufgesprüht (Neutralisationsgrad 85 Mol%). Das Molverhältnis von AMPS zu AS betrug etwa 1:16, die Polymerisationstemperatur 135°C. Während der Polymerisation wurde der Pulverzustand in der Polymerisationszone aufrechterhalten und das zugeführte Wasser zusammen mit dem aus der Neutralisation freiwerdenden Wasser kontinuierlich abdestilliert (ca. 950 g Kondensat). Anschließend wurden zur Absenkung des Restmonomerengehaltes 229,7 g Wasserstoffperoxid und 867,7 g Wasser im Verlaufe von 4 Stunden auf das intensiv bewegte Feststoffbett bei einer Guttemperatur von 135°C aufgesprüht, wobei die zugefahrene Wassermenge kontinuierlich abdestilliert wurde. Der Reaktorinhalt wurde in der gleichen Weise wie in Beispiel 1 aufgearbeitet. Man erhielt ein Copolymerisat, das einen K-Wert von 12,0, einen Neutralisationsgrad von 85 % und einen Restmonomerengehalt von weniger als 0,5 % hatte.

**Beispiel 3**

Als Polymeristionsapparatur wurde die in Beispiel 1 angegebene Vorrichtung verwendet. Im Reaktionsgefäß wurden 1500 g eines granulierten Polyamids mit einem Korndurchmesser von 2,5 - 3,5 mm vorgelegt und unter intensiver Umwälzung und Stickstoffspülung auf eine Temperatur von 140°C erwärmt.

Eine Lösung von 151,2 g AMPS, 165 g Wasser, 859,2 g AS und 0,1 g Eisen-II-sulfatheptahydrat wurde in einem statischen Mischer mit einer Initiatorlösung aus 172,2 g Wasserstoffperoxid (50%ig) und 115,7 g Wasser, sowie mit einer Reglerlösung aus 117,5 g Thioglykolsäure und 205,7 g Wasser im Volumenstronverhältnis von etwa 3,4:1:1 zusammengeführt und im Verlauf von 3 Stunden sukzessive auf das bewegte Feststoffbett aufgesprüht. Gleichzeitig wurden 430,2 g Ätznatron (100%ig) ebenfalls im Verlaufe von 3 Std. als Feststoff gleichmäßig in den Reaktor eingetragen (Neutralisationsgrad 85 Mol%). Das Molverhältnis von AMPS zu AS betrug etwa 1:16, die Polymerisationstemperatur 140°C. Während der Polymerisation wurde der Pulverzustand in der Polymerisationszone aufrechterhalten und das zugeführte Wasser zusammen mit dem aus der Neutralisation freiwerdenden Wasser kontinuierlich abdestilliert (ca. 1000 g Kondensat). Anschließend wurden zur Absenkung des Restmonomerengehaltes 229,5 g Wasserstoffperoxid und 867,7 g Wasser im Verlaufe von 4 Stunden auf das intensiv bewegte Feststoffbett bei einer Gutstemperatur von 140°C aufgesprüht, wobei die zugefahrene Wassermenge kontinuierlich abdestilliert wurde. Der Reaktorinhalt wurde in der gleichen Weise wie in Beispiel 1 aufgearbeitet. Man erhielt ein Copolymerisat, das einen K-Wert von 8,2 und einen Restmonomerengehalt von weniger als 1 % hatte.

**Beispiel 4**

In der in Beispiel 2 angegebenen Polymerisationsvorrichtung wurden 1500 g eines granulierten Polyamids mit einem Korndurchmesser von 2,5 - 3,5 mm vorgelegt und unter intensiver Umwälzung auf eine Temperatur von 140°C erwärmt. Eine Lösung von 309 g AMPS, 300 g Wasser, 859,2 g AS und 0,1 g Eisen-II-sulfatheptahydrat wurde in einem statischen Mischer mit einer Initiatorlösung aus 173,3 g Wasserstoffperoxid (50%ig) und 115,7 g Wasser, sowie mit einer Reglerlösung aus 117,5 g Thioglykolsäure und 55,7 g Wasser im Volumenverhältnis von etwa 6,5:1,7:1 zusammengeführt und im Verlauf von 3 Stunden sukzessive auf das bewegte Feststoffbett aufgesprüht. Gleichzeitig wurde eine Lösung von 430,8 g Ätznatron in 184,5 g Wasser bei einer Temperatur der Lösung von 80°C, ebenfalls im Verlaufe von 3 Stunden gleichmäßig auf die intensiv bewegte Oberfläche des gerührten Feststoffbettes aufgesprüht (Neutralisationsgrad 80 Mol%). Das Molverhältnis von AMPS zu AS betrug etwa 1:8. Die Polymerisationstemperatur betrug 140°C. Während der Polymerisation wurde der Pulverzustand in der Polymerisationszone aufrechterhalten und das zugeführte Wasser zusammen mit dem aus der Neutralisation freiwerdenden Wasser kontinuierlich abdestilliert (ca. 900 g Kondensat). Anschließend wurden zur Absenkung des Restmonomerengehaltes 229,7 g Wasserstoffperoxid und 867,7 g Wasser im Verlaufe von 4 Stunden auf das intensiv bewegte Feststoffbett bei einer Gutstemperatur von 140°C aufgesprüht, wobei die zugefahrene Wassermenge kontinuierlich abdestilliert wurde. Der Reaktorinhalt wurde in der gleichen Weise wie in Beispiel 1 aufgearbeitet. Man erhielt ein zu 80 % neutralisiertes Copolymerisat, das einen K-Wert von 11,2 und einen Restmonomerengehalt von weniger als 0,5 % hatte.

**Beispiel 5**

Eine Lösung von 872,7 g Acrylsäure und 0,1 g Eisen-II-Sulfatheptahydrat und 183,6 g einer 25%igen wäßrigen Lösung von Natriumvinylsulfonat in 190 9 g Wasser wurde in einem statischen Mischer mit einer Initiatorlösung aus 169,7 g Wasserstoffperoxid (50%ig) und 38,1 g Wasser, sowie mit einer Reglerlösung aus 85,5 g Thioglykolsäure und 155 3 g Wasser im Volumenverhältnis von etwa 4,2: 1,8: 1: 1,2 zusammengeführt und im Verlauf von 3 Stunden sukzessive auf das bewegte Feststoffbett aus pulverförmigem Polyamid aufgesprüht. Gleichzeitig wurde eine Lösung von 387,8 g Ätznatron in 166,3 g Wasser bei einer Temperatur der Lösung von 80°C ebenfalls im Verlaufe von 3 Std. gleichmäßig auf die intensiv bewegte Oberfläche des gerührten Feststoffbettes aufgesprüht. Das Gewichtsverhältnis von Natriumvinylsulfonat zu Acrylsäure betrug etwa 1: 19, die Polymerisationstemperatur 140°C. Während der Polymerisation wurde der Pulverzustand in der Polymerisationszone aufrechterhalten, und das zugeführte Wasser zusammen mit dem aus der Neutralisation freiwerdenden Wasser kontinuierlich abdestilliert (ca. 890 g Kondensat). Anschließend wurden zur Absenkung des Restmonomerengehaltes 207,4 g Wasserstoffperoxid (50%ig) und 413,7 g Wasser im Verlaufe von 4 Stunden auf das weiterhin bewegte Feststoffbett bei einer Guttemperatur von 140°C aufgesprüht, wobei wiederum die zugefahrene Wassermenge kontinuierlich abdestillierte. Der Reaktorinhalt wurde in einer Kugelmühle ca. 10 Std. gemahlen, wodurch sich das gebildete Copolymerisat als Pulver vom vorgelegten

Polyamidgranulat trennte und durch eine Siebung isoliert werden konnte.

Man erhielt ein Copolymerisat, das einen K-Wert von 12,8, einen Restmonomerengehalt von weniger als 1 % und einen Neutralisationsgrad von 80 % hatte.

**Beispiel 6**

Als Polymerisationsapparatur wurde eine Apparatur verwendet, die der in Beispiel 2 beschriebenen entsprach. Im Reaktionsgefäß wurden 1500 g eines granulierten Polyamids mit einem Korndurchmesser von 2,5 - 3,5 mm vorgelegt und unter intensiver Umwälzung auf eine Temperatur von 140°C erwärmt. Eine Lösung von 918,1 g AS, 100 g Wasser und 0,1 g Eisen-II-sulfatheptahydrat wurde in einem statischen Mischer mit einer Initiatorlösung aus 173,4 g Wasserstoffperoxid (50%ig) und 109,8 g Wasser, sowie mit einer Reglerlösung aus 88 g Thioglykolsäure und 50,6 g Wasser im Volumenverhältnis von etwa 6:1,8:1 zusammengeführt und in Verlaufe von 3 Stunden sukzessive auf das bewegte Feststoffbett aufgesprüht. Gleichzeitig wurde eine Lösung von 433,5 g Ätznatron in 185,7 g Wasser bei einer Temperatur der Lösung von 80°C ebenfalls im Verlaufe von 3 Std. gleichmäßig auf die intensiv bewegte Oberfläche des gerührten Feststoffbettes aufgesprüht. Die Polymerisationstemperatur betrug 140°C. Während der Polymerisation wurde der Pulverzustand in der Polymerisationszone aufrechterhalten und das zugeführte Wasser zusammen mit dem aus der Neutralisation freiwerdenden Wasser kontinuierlich abdestilliert. Anschließend wurden zur Absenkung des Restmonomerengehaltes 231,2 g Wasserstoffperoxid (50%ig) und 435,2 g Wasser im Verlaufe von 4 Stunden auf das intensiv bewegte Feststoffbett bei einer Gutstemperatur von 140°C aufgesprüht, wobei die zugefahrene Wassermenge kontinuierlich abdestilliert wurde. Der Reaktorinhalt wurde in der gleichen Weise wie in Beispiel 1 aufgearbeitet. Man erhielt ein zu 85 % neutralisiertes Polymerisat, das einen Teilchendurchmesser von 0,1 mm, einen K-Wert von 13,0 und einen Restmonomerengehalt von weniger als 1 % hatte.

**Beispiel 7**

Eine Lösung von 872,7 g Acrylsäure und 0,1 g Eisen-II-Sulfatheptahydrat und 183,6 g einer 25 %igen wäßrigen Lösung von Natriumvinylsulfonat in 190,9 g Wasser wurde in einem statischen Mischer mit einer Initiatorlösung aus 169,7 g Wasserstoffperoxid (50 %ig) und 38,1 g Wasser, sowie mit einer Reglerlösung aus 71 g 2-Mercaptoethanol und 155,3 g Wasser im Volumenverhältnis von etwa 4,2: 1,8: 1: 1,1 zusammengeführt und im Verlauf von 3 Stunden sukzessive auf das bewegte Feststoffbett aus pulverförmigem Polyamid aufgesprüht. Gleichzeitig wurde eine Lösung von 387,8 g Ätznatron in 166,3 g Wasser bei einer Temperatur der Lösung von 80°C ebenfalls im Verlaufe von 3 Stunden gleichmäßig auf die intensiv bewegte Oberfläche des gerührten Feststoffbettes aufgesprüht. Das Gewichtsverhältnis von Natriumvinylsulfonat zu Acrylsäure betrug etwa 1: 19, die Polymerisationstemperatur 140°C. Während der Polymerisation wurde der Pulverzustand in der Polymerisationszone aufrechterhalten und das zugeführte Wasser zusammen mit dem aus der Neutralisation freiwerdenden Wasser kontinuierlich abdestilliert (ca. 890 g Kondensat). Anschließend wurden zur Absenkung des Restmonomerengehaltes 207,4 g Wasserstoffperoxid (50 %ig) und 413,7 g Wasser im Verlaufe von 4 Stunden auf das weiterhin bewegte Feststoffbett bei einer Guttemperatur von 140°C aufgesprüht, wobei man wiederum die zugefahrene Wassermenge kontinuierlich abdestillierte.

Der Reaktorinhalt wurde anschließend in einer Kugelmühle ca. 10 Stunden gemahlen, wodurch sich das gebildete Copolymerisat als Pulver vom vorgelegten Polyamidgranulat trennte und durch ein Siebung isolieren ließ.

Man erhielt ein Copolymerisat, das einen K-Wert von 12,2, einen Restmonomerengehalt von weniger als 1 % und einen Neutralisationsgrad von 80 % hatte.

**Beispiel 8**

Eine Lösung von 780,9 g Acrylsäure und 0,1 g Eisen-II-Sulfatheptahydrat und 550,8 g einer 25 %igen wäßrigen Lösung von Natriumvinylsulfonat wurde in einem statischen Mischer mit einer Initiatorlösung aus 162,1 g Wasserstoffperoxid (50 %ig) und 44,3 g Wasser, sowie mit einer Reglerlösung aus 63,5 g 2-Mercaptoethanol und 20 g Wasser im Volumenverhältnis von etwa 9,3: 6,6: 2,5: 1 zusammengeführt und im Verlauf von 3 Stunden sukzessive auf das bewegte Feststoffbett aus pulverförmigem Polyamid aufgesprüht. Gleichzeitig wurde eine Lösung von 347,1 g Ätznatron in 148,7 g Wasser bei einer Temperatur der Lösung von 80°C ebenfalls im Verlaufe von 3 Stunden gleichmäßig auf die intensiv bewegte Oberfläche des gerührten Feststoffbettes aufgesprüht. Das Gewichtsverhältnis von Natriumvinylsulfonat zu Acrylsäure betrug etwa 1: 5,7, die Polymerisationstemperatur 140°C. Während der Polymerisation wurde der Pulverzustand in der Polymerisationszone aufrechterhalten und das zugeführte Wasser zusammen mit dem aus der Neutralisation freiwerdenden Wasser kontinuierlich abdestilliert (ca. 870 g Kondensat). Anschließend wurden zur Absenkung des Restmonomerengehaltes 216 g Wasserstoffperoxid (50 %ig) und 417,6 g Wasser im Verlaufe von 4 Stunden auf das weiterhin bewegte Feststoffbett bei einer Guttemperatur von 140°C aufgesprüht, wobei man wiederum die zugefahrene Wassermenge kontinuierlich abdestillierte.

Der Reaktorinhalt wurde anschließend in einer Kugelmühle ca. 10 Stunden gemahlen, wodurch sich das gebildete Copolymerisat als Pulver vom vorgelegten Polyamidgranulat trennte und durch ein Siebung isolieren ließ.

Man erhielt ein Copolymerisat, das einen K-Wert von 12,3, einen Restmonomerengehalt von weniger als 1 % und einen Neutralisationsgrad von 80 % hatte.

**Beispiel 9**

Eine Lösung von 780,9 g Acrylsäure und 0,1 g Eisen-II-Sulfatheptahydrat und 550,8 g einer 25 %igen wäßrigen Lösung von Natriumvinylsulfonat wurde in einem statischen Mischer mit einer Initiatorlösung aus 162,1 g Wasserstoffperoxid (50 %ig) und 44,3 g Wasser, sowie mit einer Reglerlösung aus 63,5 g 2-Mercaptoethanol und

20 g Wasser im Volumenverhältnis von etwa 9,3: 6,6: 2,5: 1 zusammengeführt und im Verlauf von 3 Stunden sukzessive auf das bewegte Feststoffbett aus pulverförmigem Polyamid aufgesprüht. Gleichzeitig wurde eine Lösung von 303,6 g Ätznatron in 130,1 g Wasser bei einer Temperatur der Lösung von 80°C ebenfalls im Verlaufe von 3 Stunden gleichmäßig auf die intensiv bewegte Oberfläche des gerührten Feststoffbettes aufgesprüht. Das Gewichtsverhältnis von Natriumvinylsulfonat zu Acrylsäure betrug etwa 1: 5,7, die Polymerisationstemperatur 140°C. Während der Polymerisation wurde der Pulverzustand in der Polymerisationszone aufrechterhalten und das zugeführte Wasser zusammen mit dem aus der Neutralisation freiwerdenden Wasser kontinuierlich abdestilliert (ca. 800 g Kondensat). Anschließend wurden zur Absenkung des Restmonomerengehaltes 216 g Wasserstoffperoxid (50 %ig) und 418 g Wasser im Verlaufe von 4 Stunden auf das weiterhin bewegte Feststoffbett bei einer Guttemperatur von 140°C aufgesprüht, wobei man wiederum die zugeführte Wassermenge kontinuierlich abdestillierte.

Der Reaktorinhalt wurde anschließend in einer Kugelmühle ca. 10 Stunden gemahlen, wodurch sich das gebildete Copolymerisat als Pulver vom vorgelegten Polyamidgranulat trennte und durch ein Siebung isolieren ließ.

Man erhielt ein Copolymerisat, das einen K-Wert von 10,5, einen Restmonomerengehalt von weniger als 1 % und einen Neutralisationsgrad von 70 % hatte.

**Beispiel 10**

Eine Lösung von 716,7 g Acrylsäure und 0,1 g Eisen-II-Sulfatheptahydrat und 808,8 g einer 25 %igen wäßrigen Lösung von Natriumvinylsulfonat wurde in einem statischen Mischer mit einer Initiatorlösung aus 156,6 g Wasserstoffperoxid (50 %ig) und 30,9 g Wasser, sowie mit einer Reglerlösung aus 67,5 9,2-Mercaptoethanol und 20 g Wasser im Volumenverhältnis von etwa 8,2: 9,2: 2,1: 1 zusammengeführt und im Verlauf von 3 Stunden sukzessive auf das bewegte Feststoffbett aus pulverförmigem Polyamid aufgesprüht. Gleichzeitig wurde eine Lösung von 318,5 g Ätznatron in 136,5 g Wasser bei einer Temperatur der Lösung von 80°C ebenfalls im Verlaufe von 3 Stunden gleichmäßig auf die intensiv bewegte Oberfläche des gerührten Feststoffbettes aufgesprüht. Das Gewichtsverhältnis von Natriumvinylsulfonat zu Acrylsäure betrug etwa 1: 3,5, die Polymerisationstemperatur 140°C. Während der Polymerisation wurde der Pulverzustand in der Polymerisationszone aufrechterhalten und das zugeführte Wasser zusammen mit dem aus der Neutralisation freiwerdenden Wasser kontinuierlich abdestilliert (ca. 1 000 g Kondensat). Anschließend wurden zur Absenkung des Restmonomerengehaltes 208,8 g Wasserstoffperoxid (50 %ig) und 420 g Wasser im Verlaufe von 4 Stunden auf das weiterhin bewegte Feststoffbett bei einer Guttemperatur von 140°C aufgesprüht, wobei man wiederum die zugefahrene Wassermenge kontinuierlich abdestillierte.

Der Reaktorinhalt wurde anschließend in einer Kugelmühle ca. 10 Stunden gemahlen, wodurch sich das gebildete Copolymeriset als Pulver vom vorgelegten Polyamidgranulat trennte und durch ein Siebung isolieren ließ.

Man erhielt ein Copolymerisat, das einen K-Wert von 10,7, einen Restmonomerengehalt von weniger als 1 % und einen Neutralisationsgrad von 80 % hatte.

**Beispiel 11**

Eine Lösung von 897,9 g Acrylsäure, 328,6 g Wasser und 0,1 g Eisen-II-Sulfatheptahydrat wurde in einem statischen Mischer mit einer Initiatorlösung aus 169,7 g Wasserstoffperoxid (50 %ig) und 38,1 g Wasser, sowie mit einer Reglerlösung aus 71 g 2-Mercaptoethanol und 155,3 g Wasser im Volumenverhältnis von etwa 3,9: 0,92: 1 zusammengeführt und im Verlauf von 3 Stunden sukzessive auf das bewegte Feststoffbett aus pulverförmigem Polyamid aufgesprüht. Gleichzeitig wurde eine Lösung von 387,8 g Ätznatron in 166,3 g Wasser bei einer Temperatur der Lösung von 80°C ebenfalls im Verlaufe won 3 Stunden gleichmäßig auf die intensiv bewegte Oberfläche des gerührten Feststoffbettes aufgesprüht. Die Polymerisationstemperatur betrug 140°C. Während der Polymerisation wurde der Pulverzustand in der Polymerisationszone aufrechterhalten und das zugeführte Wasser zusammen mit dem aus der Neutralisation freiwerdenden Wasser kontinuierlich abdestilliert (ca. 880 g Kondensat). Anschließend wurden zur Absenkung des Restmonomerengehaltes 207,4 g Wasserstoffperoxid (50 %ig) und 413,7 g Wasser im Verlaufe von 4 Stunden auf das weiterhin bewegte Feststoffbett bei einer Guttemperatur von 140°C aufgesprüht, wobei man wiederum die zugefahrene Wassermenge kontinuierlich abdestillierte.

Der Reaktorinhalt wurde anschließend in einer Kugelmühle ca. 10 Stunden gemahlen, wodurch sich das gebildete Copolymerisat als Pulver vom vorgelegten Polyamidgranulat trennte und durch ein Siebung isolieren ließ.

Man erhielt ein Copolymerisat, das einen K-Wert von 13,1, einen Restmonomerengehalt von weniger als 1 % und einen Neutralisationsgrad von 78 % hatte.

Herstellung wäßriger Pigmentanschlämmungen - allgemeine Vorschrift

In einem 2 l Rührgefäß aus Edelstahl wurden jeweils in 1 1 Wasser 4 g eines der in der Tabelle 1 angegebenen Dispergiermittels (jeweils 100%iges Polymerisat) gelöst. Unter kräftigem Rühren mit einem Laborschnellrührer trug man 780 g eines feinteiligen gemahlenen Calciumcarbonats (Teilchengröße des Calciumcarbonats 90 % $< 2$ µm) in kleinen Portionen innerhalb von 20 Minuten ein, wobei man darauf achtete, daß das zugesetzte Pigment weitgehend dispergiert war. Durch Zugabe von wäßriger Natronlauge wurde der pH-Wert der Pigmentanschlämmung auf 9 eingestellt. Die Mischung wurde anschließend noch 5 Minuten bei Raumtemperatur homogenisiert. Danach wurde die Viskosität der wäßrigen Pigmentanschlämmung gemessen.

**Beispiel 12**

Gemäß der allgemeinen Vorschrift für die Herstellung wäßriger Anschlämmungen von Kreidepigmenten für

Papierstreichmassen wurden 78%ige Anschlämmungen hergestellt, wobei man 0,4 Gew.%, bezogen auf Pigment, des gemäß Beispiel 1 erhaltenen Copolymerisates (Copolymerisat 1) verwendet. Die Viskosität der wäßrigen Pigmentanschlämmungen wurde bei verschiedenen Temperaturen gemessen. Zum Vergleich wurde eine 78%ige wäßrige Anschlämmung des gleichen Pigments unter Verwendung des Vergleichsdispergiermittels auf Basis eines Polacrylats hergestellt. Es wurde ebenfalls die Viskosität der bekannten Pigmentanschlämmungen bei verschiedenen Temperaturen gemessen. Die Ergebnisse sind in Tabelle 1 zusammengestellt. Man sieht daraus, daß bei wäßrigen Pigmentanschlämmungen, zu deren Herstellung ein bekanntes Dispergiermittel verwendet wurde, mit steigender Temperatur ein stärkerer Viskositätsabfall einsetzt als bei den wäßrigen Pigmentanschlämmungen, für deren Herstellung ein Copolymerisat gemäß Erfindung eingesetzt wurde.

**Tabelle 1**

| Dispergiermittel | Viskosität [mPas] der wäßrigen Anschlämmung bei | | | |
|---|---|---|---|---|
| | 25°C | 40°C | 55°C | 70°C |
| Copolymerisat 1 | 870 | 670 | 620 | 600 |
| Vergleichs-Dispergiermittel | 920 | 640 | 480 | 390 |

**Beispiel 13**

Es wurden 3 verschiedene 78%ige Kreideanschlämmungen hergestellt, die alle einen pH-Wert von 9 hatten und sich nur durch die jeweils eingesetzte Dispergiermittelmenge unterschieden. Als Dispergiermittel wurden die gemäß den Beispielen 2 und 3 hergestellten Copolymerisate (Copolymerisate 2 bzw. 3) verwendet. Die eingesetzten Mengen an 100%igem Copolymerisat sowie die Viskositäten der 78%igen wäßrigen Kreideanschlämmungen sind in Tabelle 2 angegeben. Zum Vergleich mit dem Stand der Technik wurden ebenfalls drei verschiedene Anschlämmungen mit unterschiedlichen Mengen des Vergleichsdispergiermittels hergestellt.

**Tabelle 2**

| Dispergiermittel | Viskositäten [mPas] der 78%igen wäßrigen Kreidenanschlämmung bei Zusatz von | | |
|---|---|---|---|
| | 0,35 Gew.% | 0,4 Gew.% | 0,5 Gew.% |
| | Dispergiermittel | | |
| Copolymerisat 2 | 2350 | 870 | 510 |
| Vergleichsdispergiermittel | 3100 | 920 | 650 |
| Copolymerisat 3 | 2400 | 900 | 550 |

Aus der Tabelle 2 ist zu entnehmen, daß bereits eine sehr geringe Menge der Copolymerisate 2 oder 3 ausreicht, um verglichen mit dem Stand der Technik, eine wirksame Dispergierung des Pigments zu entfalten.

**Beispiel 14**

Es wurden verschiedene 78%ige wäßrige Kreideanschlämmungen hergestellt, wobei man als Dispergiermittel Acrylsäure-Copolymerisate mit unterschiedlichem Gehalt an Acrylamidopropansulfonsäure verwandete. Die Ergebnisse sind in Tabelle 3 angegeben und werden mit dan Ergebnissen verglichen, die mit dem Vergleichsdispergiermittel erhalten wurden.

**Tabelle 3**

| Copolmerisat aus Acrylsäure und AMPS* Copolymerisat Nr. | Gew.% AS* | Gew.% AMPS | Viskosität der wäßrigen Anschlämmung bei Zusatsz von 0,35% Dispergiermittel (fest) | 0,50% Dispergiermittel (fest) |
|---|---|---|---|---|
| 2 | 85 | 15 | 570 | 460 |
| 4 | 70 | 30 | 500 | 440 |
| Vergleichsdispergiermittel | 100 | | 1 900 | 380 |

* AMPS = 2-Acrylamido-2-methyl-propansulfonsäure
AS = Acrylsäure

**Beispiel 15**

Zum Nachweis der Wirksamkeit der Polymerisate - hergestellt nach dem Verfahren der Polymerisation im gerührten Feststoffbett - und zum Vergleich mit dem Stand der Technik bei konventionell hergestellten Inkrustationsinhibitoren auf Basis von Polyacrylsäure wurden jeweils Serien von 20 Wäschen im Launder-0-meter vorgenommen und die Veränderungen im Aschegehalt als Maß für die Wirksamkeit der Inkrustationsinhibierung herangezogen.

Prüfbedingungen:
Flotte: 250 ml
Flottenverhältnis: 1:12,5
Wasserhärte: 22°d (8,5 Ca:1,5 Mg)
Dauer: 45 Minuten
Temperatur: 40°C bis 95°C (Temperaturprogramm)
Prüfgewebe: je 10 g Baumwolle 222 + 10 g Frottee
Waschmittel: 8 g/l (orthophosphathaltig)
Inhibitorzusatz: 2 Gew.%

**Tabelle 4**

| Nr. | Inkrustationsinhibitor | Aschegehalt in % Baumwolle 222 | Frottee |
|---|---|---|---|
| 1 | ohne | 2,54 | 6,38 |
| 2 | Vergleichsinkrustations-inhibition[1] | 1,92 | 3,56 |
| 3 | PAS-Na[2] | 1,56 | 3,34 |
| 4 | PAS/AMPS-Na | 1,32 | 2,71 |
| 5 | PAS-$NH_4$ | 1,60 | 2,72 |

1) Stand der Technik bei Inkrustationsinhibitoren bei konventioneller Herstellung auf Basis von Polyacrylsäure
2) Na-Salz der Polyacrylsäure

Die in der Tabelle 4 zusammengestellten Prüfergebnisse zeigen, daß die nach dem erfindungsgemäßen Verfahren hergestellten Produkte auf Basis von Polyacrylsäure den nach bekannten Standardverfahren hergestellen hinsichtlich der Inkrustationsinhibierung deutlich überlegen sind.

**Beispiel 16**

Gemäß der allgemeinen Vorschrift für die Herstellung wäßriger Anschlämmungen von Kreidepigmenten für Papierstreichmassen wurden 78%ige Anschlämmungen hergestellt, wobei man 0,4 Gew.%, bazogen auf Pigment, des gemäß Beispiel 7 erhaltenen Copolymarisates (Copolymerisat 7) verwendet. Die Viskosität der wäßrigen Pigmentanschlämmungen wurda bei verschiedenen Temperaturen gemessen. Zum Vergleich wurde eine 78%ige wäßrige Anschlämmung des gleichen Pigments unter Verwendung des Vergleichsdispergiermittels auf Basis eines Polyacrylats vom K-Wert 16 hergestellt. Es wurde ebenfalls die Viskosität der bakannten Pigmentanschlämmungen bei verschiedenen Temperaturen gemessen. Die Ergebnisse sind in Tabelle 5 zusammengestellt. Man sieht daraus, daß bei wäßrigen Pigmentanschlämmungen, zu deren Herstellung ein bekanntes Dispergiermittel verwendet wurde, mit steigender Temperatur ein stärkerer Viskositätsabfall einsetzt als bei den wäßrigen Pigmentanschlämmungen, für deren Herstellung ein Copolymerisat gemäß Erfindung eingesetzt wurde.

**Tabelle 5**

| Dispergiermittel | Viskosität [mPas] der wäßrigen Anschlämmung bei 25°C | 40°C | 55°C | 70°C |
|---|---|---|---|---|
| Copolymerisat 7 | 820 | 720 | 680 | 640 |
| Vergleichs-Dispergiermittel | 920 | 640 | 480 | 390 |

**Beispiel 17**

Es wurden 3 verschiedene 78%ige Kreideanschlämmungen hergestellt, die alle einen pH-Wert von 9 hatten und sich nur durch die jeweils eingesetzte Dispergiermittelmenge unterschieden. Als Dispergiermittel wurden die gemäß den Beispielen 7 und 9 hergestellten Copolymerisate (Copolymerisate 7 bzw. 9) verwendet. Die eingesetzten Mengen an 100%igem Copolymerisat sowie die Viskositäten der 78%igen wäßrigen Kreideanschlämmungen sind in Tabelle 6 angegeben. Zum Vergleich mit dem Stand der Technik wurden ebenfalls drei verschiedene Anschlämmungen mit unterschiedlichen Mengen des Vergleichsdispergiermittels hergestellt.

**Tabelle 6**

| Dispergiermittel | Viskositäten [mPas] der 78%igen wäßrigen Kreidenanschlämmung bei Zusatz von 0,35 Gew.% Dispergiermittel | 0,4 Gew.% | 0,5 Gew.% |
|---|---|---|---|
| Copolymerisat 7 | 2200 | 820 | 410 |
| Vergleichsdispergiermittel | 3100 | 920 | 650 |
| Copolymerisat 9 | 2000 | 700 | 350 |

Aus der Tabelle 6 ist zu entnehmen, daß bereits eine sehr geringe Menge der Copolymerisate 7 oder 9 ausreicht, um verglichen mit dem Stand der Technik, eine wirksame Dispergierung des Pigments zu entfalten.

**Beispiel 18**

Es wurden verschiedene 78%ige wäßrige Kreideanschlämmungen hergestellt, wobei man als Dispergiermittel Acrylsäure-Copolymerisate mit unterschiedlichem Gehalt an Natriumvinylsulfonat verwendete. Die Ergebnisse sind in Tabelle 7 angegeben und werden mit den Ergebnissen verglichen, die mit dem Vergleichsdispergiermittel erhalten wurden.

**Tabelle 7**

| Copolmerisat aus Acrylsäure und VSNa* Copolymerisat Nr. | Gew.% AS* | Gew.% VSNa | Viskosität der wäßrigen Anschlämmung bei Zusatsz von 0,35% Dispergiermittel (fest) | 0,50% Dispergiermittel (fest) |
|---|---|---|---|---|
| 7 | 95 | 5 | 470 | 360 |
| 10 | 78 | 22 | 420 | 340 |
| Vergleichsdispergiermittel | 100 | | 1 900 | 380 |

* VSNa = Natriumvinylsulfonat
AS = Acrylsäure

**Beispiel 19**

Zum Nachweis der Wirksamkeit der Polymerisate - hergestellt nach dem Verfahren der Polymerisation im gerührten Feststoffbett - und zum Vergleich mit dem Stand der Technik bei konventionell hergestellten Inkrustationsinhibitoren auf Basis von Polyacrylsäure wurden jeweils Serien von 20 Wäschen im Launder-0-meter vorgenomman und die Veränderungen im Aschegehalt als Maß für die Wirksamkeit der Inkrustationsinhibierung herangezogen.

Prüfbedingungen:
Flotte: 250 ml
Flottenverhältnis: 1:12,5
Wasserhärte: 22° d (8,5 Ca:1,5 Mg)
Dauer: 45 Minuten
Temperatur: 40° C bis 95° C (Temperaturprogramm).
Prüfgewebe: je 10 g Baumwolle 222 + 10 g Frottee
Waschmittel: 8 g/l (orthophosphathaltig)
Inhibitorzusatz: 2 Gew.%

**Tabelle 8**

| Nr. | Inkrustationsinhibitor | Aschegehalt in % Baumwolle 222 | Frottee |
|---|---|---|---|
| 1 | ohne | 2,54 | 6,38 |
| 2 | Vergleichsinkrustations- Vergleich inhibition[1] | 1,92 | 3,56 |
| 3 | Copolymerisat gemß Beispiel 7 | 1,34 | 2,70 |

1) Stand der Technik bei Inkrustationsinhibitoren bei konventioneller Herstellung auf Basis von Polyacrylsäure

Die in Tabelle 8 zusammengestellten Prüfergebnisse zeigen, daß die nach dem erfindungsgemäßen Verfahren hergestellten Produkte auf Basis von Polyacrylsäure den nach bekannten Standardverfahren hergestellen hinsichtlich der Inkrustationsinhibierung deutlich überlegen sind.

**Patentansprüche**

1. Verfahren zur Herstellung von pulverförmigen Polymerisaten auf Basis von wasserlöslichen ethylenisch ungesättigten Monomeren durch Polymerisieren von Monomeren oder Monomerenmischungen aus
a) 100 bis 40 Gew.% Acrylsäure und/oder Methacrylsäure,
b) 0 bis 60 Gew.% einer Verbindung der Formel

$$CH_2=\overset{R}{\overset{|}{C}}-CO-X-A-SO_3Me \qquad (I),$$

in der
R = H, $CH_3$
X - NH, -O
-A = $C_1$- bis $C_8$-Alkylen und gegebenenfalls $C_1$ bis $C_3$-alkylsubstituiertes Alkylen und
Me = H, Na, K, $NH_4$
bedeuten und/oder 0 bis 30 Gew.% einer Verbindung der Formel
$CH_2=CH-SO_3Me$ (II),
in der Me die in Formel I angegebene Bedeutung hat, und c) 0 bis 30 Gew.% Maleinsäureanhydrid oder Maleinsäure,

wobei die Summe der Prozentangaben a) bis c) jeweils 100 beträgt und die Monomeren in Wasser oder in Wasser-Isopropanol-Mischungen gelöst sind,

in einem Pulverbett in Gegenwart üblicher Polymerisationsinitiatoren unter Aufrechterhaltung des Pulverzustands und Abführen der Polymerisationswärme durch Abdestillieren der Lösungsmittel, dadurch gekennzeichnet, daß 40 bis 95 % der Säuregruppen der Monomeren neutralisiert sind und daß die Polymerisation in Gegenwart von 0,05 bis 10 Mol%, bezogen auf die Monomeren, einer Thiocarbonsäure, eines Enolethers der Formel

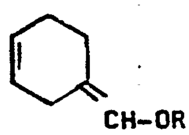

(III),

in der R = $C_1$- bis $C_5$-Alkyl ist und/oder Salzen oder Chelaten von Übergangsmetallen der 8. Nebengruppe des Periodischen Systems sowie von Kupfer oder 2-Mercaptoethanol als Regler durchgeführt wird.

2. Verfahren nach Anspruch 1, dadurch gekennzeichnet, daß Homopolmerisate der Acrylsäure hergestellt werden.

3. Verfahren nach Anspruch 1, dadurch gekennzeichnet, daß Copolymerisate aus
a) 95 bis 40 Gew.% Acrylsäure und/oder Methacrylsäure und
b) 5 bis 60 Gew.% 2-Acrylamido-2-methylpropansulfonsäure
hergestellt werden.

4. Verfahren nach Anspruch 1, dadurch gekennzeichnet, daß Copolymerisate aus
a) 95 bis 75 Gew.% Acrylsäure und
b) 5 bis 25 Gew.% Natriumvinylsulfonat
hergestellt werden.

5. Verfahren nach den Ansprüchen 1 bis 4, dadurch gekennzeichnet, daß Thioglykolsäure als Regler eingesetzt wird.

6. Verfahren nach den Ansprüchen 1 bis 4, dadurch gekennzeichnet, daß 2-Mercaptoethanol als Regler eingesetzt wird.

7. Verfahren nach Ansprüchen 1 bis 4, dadurch gekennzeichnet, daß als Lösungsmittel Wasser-Isopropanol-Mischungen eingesetzt werden, die bis zu 25 Gew.% Isopropanol enthalten.

8. Verwendung der nach dem Verfahren der Ansprüche 1 bis 7 hergestellten Polymerisate als Mahlhilfsmittel und/oder Dispergiermittel zur Herstellung wäßriger Anschlämmungen von Pigmenten für Papierstreichmassen.

9. Verwendung der nach dem Verfahren der Ansprüche 1 bis 7 hergestellten Polymerisate als Inkrustierungsinhibitoren für Waschmittel.

## Claims

A process for the preparation of pulverulent polymers based on water-soluble ethylenically unsaturated monomers by polymerizing monomers or monomer mixtures consisting of
(a) 100 to 40% by weight of acrylic acid and/or methacrylic acid,
(b) 0 to 60% by weight of a compound of the formula

$$CH_2=\overset{R}{\overset{|}{C}}-CO-X-A-SO_3Me \quad (I),$$

where
R = H or $CH_3$,
X = -NH- or -O-,
A = alkylene of 1 to 8 carbon atoms, or alkylene optionally substituted by alkyl of 1 to 3 car bon atoms, and
Me = H, Na, K or $NH_4$,
and/or 0 to 30% by weight of a compound of the formula
$CH_2=CH-SO_3Me$ (II),
where Me has the same meanings as in formula I, and (c) 0 to 30% by weight of maleic anhydride or maleic acid, the sum of the percentages given under (a) to (c) being 100 in each case, and the monomers being dissolved in water or in water/isopropanol mixtures, in a powder bed in the presence of conventional polymerization initiators, while maintaining the pulverulent state and removing the heat of polymerization by distilling off the solvent, wherein 40 to 95% of the acidic groups of the monomers are neutralized, and the polymerization is carried out in the presence of from 0.05 to 10 mole%, based on the monomers, of a thiocarboxylic acid, an enol ether of the formula

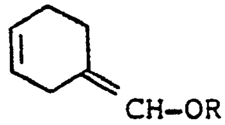

(III),

where R is alkyl of 1 to 5 carbon atoms chelates of transition metals of group VIII of the periodic system, and of copper or 2-mercaptoethanol as regulator.

2. A process as claimed in claim 1, wherein homopolymers of acrylic acid are prepared.

3. A process as claimed in claim 1, wherein copolymers consisting of
(a) 95 to 40% by weight of acrylic acid and/or methacrylic acid, and
(b) 5 to 60% by weight of 2-acrylamido-2-methylpropane-sulfonic acid
are prepared.

4. A process as claimed in claim 1, wherein copolymers consisting of
(a) 95 to 75% by weight of acrylic acid, and
(b) 5 to 25% by weight of sodium vinylsulfate are prepared.

5. A process as claimed in claims 1 to 4, wherein thioglycolic acid is used as regulator.

6. A process as claimed in claims 1 to 4, wherein 2-mercapto-ethanol is used as regulator.

7. A process as claimed in claims 1 to 4, wherein a water/ isopropanol mixture containing up to 25% by weight of isopropanol is used as solvent.

8. The use of the polymers prepared by a process as claimed in claims 1 to 7 as grinding aids and/or dispersants for the production of aqueous slurries of pigments for paper coating compositions.

9. The use of the polymers prepared by a process as claimed in claims 1 to 7 as incrustation inhibitors for detergents.

**Revendications**

1. Procédé pour la préparation de polymères en poudre à base de monomères éthgléniquement insatures solubles dans l'eau, par polymérisation de monomères ou de mélanges de monomères formés de
a) 100 à 40 % en poids d'acide acrylique et/ou d'acide methacrylique,
b) 0 à 60 % en poids d'un composé de formule

$$CH_2=\overset{R}{\overset{|}{C}}-CO-X-A-SO_3Me \qquad (I)$$

dans laquelle
R = H, $CH_3$,
X = -NH-, -O-,
A = alkylène en $C_1$ à $C_8$ et alkylène éventuellement substitué par un radical alkyle en $C_1$ à $C_3$ et
Me = H, Na, K, $NR_4$
et/ou 0 à 30 % en poids d'un composé de formule
$CH_2=CH-SO_3Me$ (II)
dans laquelle Me a la signification donnée pour la formule I, c) 0 à 30 % en poids d'anhydride maléique ou d'acide maléique, la somme des pourcentages de a) à c) s'élevant à 100 et les monomères étant dissous dans l'eau ou dans des mélanges d'eau et d'isopropanol,

dans un lit de poudre en présence d'initiateurs de polymérisation usuels, en maintenant l'état pulvérulent et en évacuant la chaleur de polymérisation par élimination du solvant par distillation, caractérisé en ce que 40 à 95 % des groupes acide des monomères sont neutralisés et en ce que la polymérisation est effectuée en présence de 0,05 à 10 mol %, sur la base des monomères, d'un acide thiocarboxylique, d'un éther énolique de formule

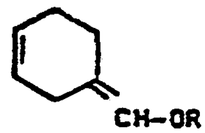

(III)

dans laquelle R = alkyle en $C_1$ à $C_5$ et/ou de sels ou chélates de métaur de transition du groupe VIII de la classification périodique ainsi que de cuivre ou de 2-mercapto-éthanol en tant que régulateur.

2. Procédé selon la revendication 1, caractérisé en ce qu'il est préparé des homopolymères de l'acide acrylique.

3. Procédé selon la revendication 1, caractérisé en ce qu'il est preparé des copolymères de:
a) 95 à 40 % en poids d'acide acrylique et/ou d'acide méthacrylique et
b) 5 à 60 % en poids d'acide 2-acrylamido-2-méthylpropane-sulfonique.

4. Procedé selon la revendication 1, caractérisé en ce qu'il est préparé des copolymères de :
a) 95 à 75 % en poids d'acide acrylique et
b) 5 à 25 % en poids de vinylsulfonate de sodium.

5. Procédé selon l'une quelconque des revendications 1 à 4, caractérisé en ce que l'acide thioglycolique est utilisé comme régulateur.

6. Procédé selon l'une quelconque des revendications 1 à 4, caractérisé en ce que le 2-mercapto-éthanol est utilisé comme régulateur.

7. Procédé selon l'une quelconque des revendications 1 à 4, caractérisé en ce qu'on utilise, comme solvant, des mélanges d'eau et d'isopropanol qui contiennent jusqu'à 25 % en poids d'isopropanol.

8. Utilisation des polymères préparés suivant le procédé de l'une quelconque des revendications 1 à 7, comme produit auxiliaire de broyage fin et/ou agent de dispersion pour la préparation de suspensions aqueuses de pigments pour pâtes de couchage pour papier.

9. Utilisation des polymères préparés suivant le procédé de l'une quelconque des revendications 1 à 7, comme inhibiteurs d'incrustation pour produits de lavage.